# FASCICULE DE BREVET EUROPEEN

(11) **EP 2 368 298 B1**
(45) Date de publication et mention de la délivrance du brevet: **20.02.2013**
(21) Numéro de dépôt: 09763967.8
(22) Date de dépôt: 03.12.2009
(51) Int. Cl.: H01S 3/139

(54) **Système laser muni d'un asservissement de fréquence**
Lasersystem mit einer Frequenzregeleinrichtung
Laser system provided with a frequency servo

(30) Priorité: 23.12.2008 FR 0859014
(43) Date de publication de la demande: 28.09.2011
(73) Titulaire: Observatoire de Paris, 75014 Paris (FR); Centre National de la Recherche Scientifique, 75794 Paris Cedex 16 (FR); Université Pierre et Marie Curie - Paris 6, 75252 Paris Cedex 05 (FR)
(72) Inventeur: KEFELIAN, Fabien, 75009 Paris (FR); JIANG, Haifeng, Boulder, CO (US); LEMONDE, Pierre, 75010 Paris (FR); SANTARELLI, Giorgo, 93220 Gagny (FR)
(74) Mandataire: Chaffraix, Jean
(86) Numéro de dépôt international: PCT/EP2009/066338
(87) Numéro de publication internationale: WO 2010/072535

(56) Documents cités:
- US-A1- 2004 179 561
- US-B1- 6 516 014
- SHEARD B S ET AL: "HIGH-BANDWIDTH LASER FREQUENCY STABILIZATION TO A FIBER-OPTIC DELAY LINE" APPLIED OPTICS, OSA, OPTICAL SOCIETY OF AMERICA, WASHINGTON, DC, vol. 45, no. 33, 20 novembre 2006 (2006-11-20), pages 8491-8499, XP001501849 ISSN: 0003-6935 cité dans la demande
- J.F. CLICHE ET AL.: "High-power and ultranarrow DFB laser: the effect of linewidth reduction systems on coherence length and interferometer noise" PROCEEDINGS OF THE SPIE - THE INTERNATIONAL SOCIETY FOR OPTICAL ENGINEERING, vol. 6216, 2006, pages 62169C-1-62160C-11, XP002536904
- JIANG H ET AL: "Long-distance frequency transfer over an urban fiber link using optical phase stabilization" JOURNAL OF THE OPTICAL SOCIETY OF AMERICA - B, OPTICAL SOCIETY OF AMERICA, WASHINGTON, US, vol. 25, no. 12, 1 décembre 2008 (2008-12-01), pages 2029-2035, XP007907794 ISSN: 0740-3224
- C. GREINER ET AL.: "Laser frequency stabilization by means of optical self-heterodyne beat-frequency control" OPTICS LETTERS, vol. 23, no. 16, 15 août 1998 (1998-08-15), pages 1280-1282, XP002536905
- DREVER R W P ET AL: "LASER PHASE AND FREQUENCY STABILIZATION USING AN OPTICAL RESONATOR" APPLIED PHYSICS B. PHOTOPHYSICS AND CHEMISTRY, SPRINGER VERLAG. HEIDELBERG, DE, vol. B31, no. 2, 1 juin 1983 (1983-06-01), pages 97-105, XP000710689
- KEFELIAN F ET AL: "Ultra low frequency noise laser by locking to an all-fibered interferometer" LASERS AND ELECTRO-OPTICS 2009 AND THE EUROPEAN QUANTUM ELECTRONICS CONFERENCE. CLEO EUROPE - EQEC 2009. EUROPEAN CONFERENCE ON, IEEE, PISCATAWAY, NJ, USA, 14 juin 2009 (2009-06-14), page 1, XP031501118 ISBN: 978-1-4244-4079-5

## Description

La présente invention concerne un système laser muni d'un dispositif de rayonnement laser pourvu d'une commande de fréquence et d'un circuit d'asservissement de la fréquence dudit rayonnement, circuit d'asservissement comportant:
- un circuit interférométrique de type hétérodyne pourvu d'une entrée pour recevoir ledit rayonnement, d'une sortie d'interférence , d'au moins deux bras dont l'un est dit bras court et un autre est dit bras long et d'un dispositif de modulation de fréquence disposé dans l'un des bras,
- un générateur de modulation pour fournir un signal de modulation audit dispositif de modulation,
- un circuit photo-détecteur relié à ladite sortie d'interférence,
- un circuit détecteur d'erreur pour fournir un signal d'erreur, recevant d'un côté un signal dit local provenant du générateur de modulation et de l'autre le signal dit hétérodyne fourni par ledit circuit photo-détecteur.
- un circuit de filtrage pour fournir à partir des signaux émanant du circuit détecteur d'erreur, des premiers signaux de correction.

Les systèmes laser à bas bruit de fréquence trouvent d'importantes applications dans de nombreux domaines par exemple la recherche pétrolière pour laquelle ils constituent un élément de base au détecteur sismique, la télémétrie etc.

Un tel système laser est décrit dans l'article « High-bandwidth laser frequency stabilization to a fiber-optic delay line » de Benjamin S. Sheard et al paru le 20 novembre 2006 dans la revue APPLIED OPTICS (Vol. 45 No.33).

L'invention propose un système du genre mentionné dans le préambule qui offre un rayonnement laser présentant de bonnes performances et notamment un bruit en fréquence réduit.

Conformément à l'invention, le dispositif selon le préambule est remarquable en ce que tous les éléments participant au rayonnement laser sont du type fibré, notamment le dispositif laser, le circuit interférométrique, le circuit de modification de fréquence, le circuit photo-détecteur et en ce qu'il est prévu des fibres optiques pour assurer toutes les liaisons entre ces éléments

La demanderesse s'est rendue compte que cette caractéristique apporte une grande simplicité de mise en oeuvre et une grande robustesse au système en raison de l'absence de tout réglage nécessaire concernant l'alignement des éléments optiques, tout en permettant d'obtenir une stabilisation très importante de la fréquence optique.

Selon un autre mode de réalisation, un système laser est remarquable en ce que le système d'asservissement comporte un module de commande de variation de la phase entre le signal dit « local » et le signal dit « hétérodyne » pour faire varier de façon déterminée la fréquence du rayonnement laser à fournir à l'utilisation. Selon ce mode de réalisation, on obtient l'avantage qu'il est possible de faire varier de façon asservie la fréquence du rayonnement laser notamment de façon numérique.

La description suivante accompagnée des dessins ci-annexés, le tout donné à titre d'exemple non limitatif, fera bien comprendre comment l'invention peut être réalisée. Dans les dessins, les figures représentent :
la figure 1 montre un dispositif laser conforme à l'invention.
la figure 2 montre un circuit interférométrique de type Michelson,
la figure 3 montre un circuit interférométrique de type Mach-Zehnder,
la figure 4 une variante de réalisation d'un système laser présentant une commande de fréquence de type numérique,
la figure 5 montre un tableau comparatif des résultats obtenus par les mesures préconisées par l'invention vis-à-vis des systèmes lasers connus.

Sur ces figures, les éléments communs portent tous les mêmes références.

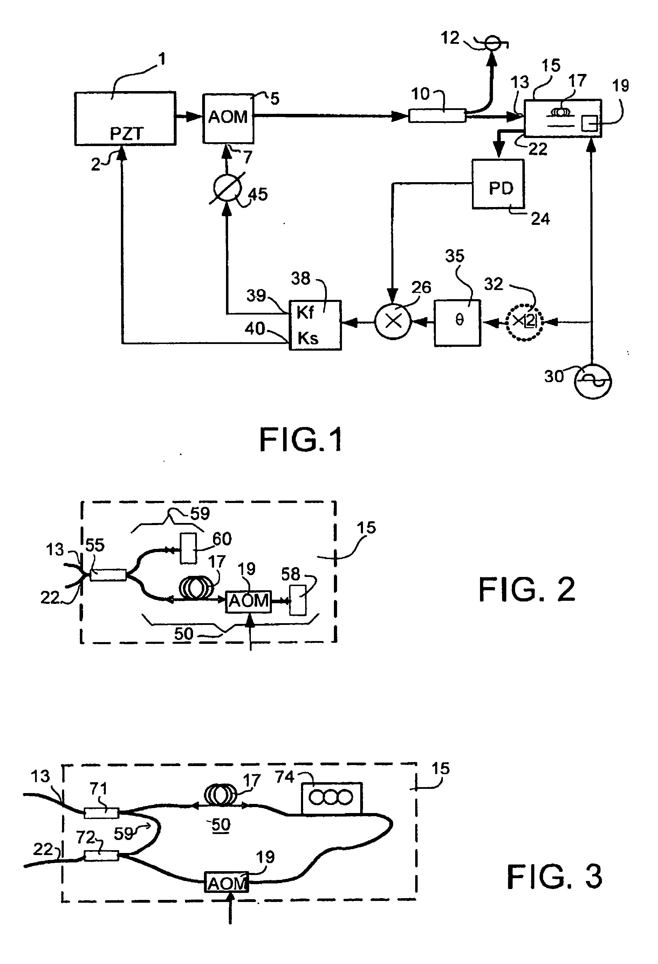

A la figure 1, la référence 1 indique une source laser de signal optique. Ce dispositif est muni d'une commande de fréquence 2 qui agit par exemple sur un élément piézoélectrique couplé à la cavité de cette source laser 1 faisant ainsi varier sa fréquence sur une large plage. La sortie du laser 1 est connectée à un modulateur acousto-optique 5 muni d'une entrée de modulation 7. La sortie de ce modulateur est reliée à l'entrée d'un coupleur optique 10 qui fournit, à la sortie 12, le signal optique à bas bruit de fréquence et qui en prélève une partie pour l'appliquer à l'entrée 13 d'un interféromètre à décalage de fréquence 15. Cette interféromètre 15 comporte, entre autres, un bras court et un bras long comportant une bobine de fibre optique 17 de grande longueur (~ 1 km) et un dispositif de modulation 19 de type acousto-optique également réalisant un décalage en fréquence du signal. Le décaleur de fréquence 19 peut également être placé dans le bras court. Cet interféromètre est convenablement protégé des perturbations mécaniques, acoustiques et thermiques environnementales selon des procédés à la portée de l'homme de l'art. A la sortie de l'interféromètre 15, dite sortie d'interférence 22 on recueille la superposition des ondes optiques issues des bras court et long formant le signal interférométrique optique. Ce signal interférométrique est envoyé à un photo-détecteur 24. Le photo-détecteur délivre un signal radiofréquence dont la phase est modulée par un signal proportionnel au bruit de fréquence du laser mesurée par référence à la longueur de la fibre 17. Ce signal RF modulé est démodulé au moyen d'un circuit mélangeur 26 qui est branché à l'oscillateur 30 pilotant le modulateur 19. Avant d'être appliqué au mélangeur 26, la fréquence du signal issu de l'oscillateur local 30 peut être modifiée pour tenir compte du circuit interférométrique 15. Ainsi pour un circuit interférométrique de type Michelson la fréquence de sortie nécessite d'être multipliée par 2 au moyen d'un multiplicateur 32. Si c'est un circuit interférométrique de type Mach-Zehnder ce multiplicateur n'est pas inséré. Il est important de noter que les câbles électriques induisent un déphasage θ entre le signal dit local et le signal dit hétérodyne. Ce déphasage θ est représenté par la boîte 35 à la figure 1. Dans le cas où le modulateur 19 est un modulateur acousto-optique ou un modulateur électro-optique à une seule bande latérale, la fréquence du laser asservi (12) varie avec ce déphasage, propriété remarquable qui est exploitée par la suite.

Conformément à l'invention, le système laser est du type fibré c'est à dire que tous les éléments, notamment le circuit interférométrique, participant à la transmission du rayonnement sont du type fibré. C'est à dire qu'ils sont munis de connecteurs pour fibres optiques et qu'ils sont donc reliés entre eux par fibres optiques. Les fibres optiques peuvent être des types suivants : fibre monomode standard, fibre à maintien de polarisation, fibre polarisantes et fibre à cristaux photoniques.

Selon un autre aspect de l'invention, le signal de sortie du mélangeur 26 est appliqué à un filtre de boucle d'asservissement 38 qui fournit respectivement sur deux de ses sorties 39 et 40 un signal d'erreur filtré selon deux constantes de temps Kf et Ks. La constante de temps Kf correspond à une fluctuation rapide du signal d'erreur et la constante de temps Ks à une fluctuation lente de ce signal d'erreur. Le signal d'erreur filtré à la sortie 40 est appliqué à la commande 2 agissant sur la fréquence du laser et le signal d'erreur à la sortie 39 à la commande de variation de fréquence d'un oscillateur contrôlé en tension 45 dont la fréquence de sortie peut varier rapidement dans une plage de l'ordre de 1 MHz, par exemple. Le signal de sortie de cet oscillateur est appliqué à l'entrée de modulation 7 du modulateur 5 ce qui permet donc une correction rapide de la fréquence du signal optique sortant par la voie 12. On peut utiliser différents circuits interférométriques dont deux exemples, non limitatifs sont donnés ci-dessous. D'autres types peuvent convenir pour la mise en application de l'invention.

Selon un premier exemple, le circuit interférométrique (15), montré en détail à la figure 2, est un interféromètre de type Michelson. Il se compose tout d'abord de la bobine de fibre optique 17 qui est insérée dans le bras long 50 de cet interféromètre entre un accès d'un coupleur 55 et un miroir de type Faraday 58. Un autre accès du coupleur 55 est connecté au bras court 59 qui se compose essentiellement d'un miroir de Faraday 60. Le modulateur 19 peut être inséré dans le bras long ou court. Deux autres accès du coupleur constituent respectivement l'entrée 13 de l'interféromètre et sa sortie d'interférence 22. Le choix des miroirs de Faraday 58 et 60 assure un parfait alignement des polarisations des deux champs optiques au niveau de la sortie 22 afin d'obtenir un signal de battement optimal.

Selon un deuxième exemple, le circuit interférométrique, montré en détail à la figure 3 est un interféromètre de type Mach-Zehnder qui peut être utilisé par l'invention. Le bras long 50 et le bras court 59 sont connectées respectivement à deux accès de coupleurs 71 et 72 et leurs sorties à deux autres accès de ces coupleurs 71 et 72. Le bras long 50 est constitué d'une bobine de fibre 17, d'un dispositif d'orientation de polarisation 74 de façon à aligner les polarisations des ondes issues des deux bras à l'entrée du coupleur 72 et d'un modulateur acousto-optique 19. Le bras court est réalisé en connectant directement les extrémités fibrés des coupleurs 71 et 72. Le modulateur acousto-optique 19 et/ou le contrôleur de polarisation 74 peut également être placé dans le bras court 59.

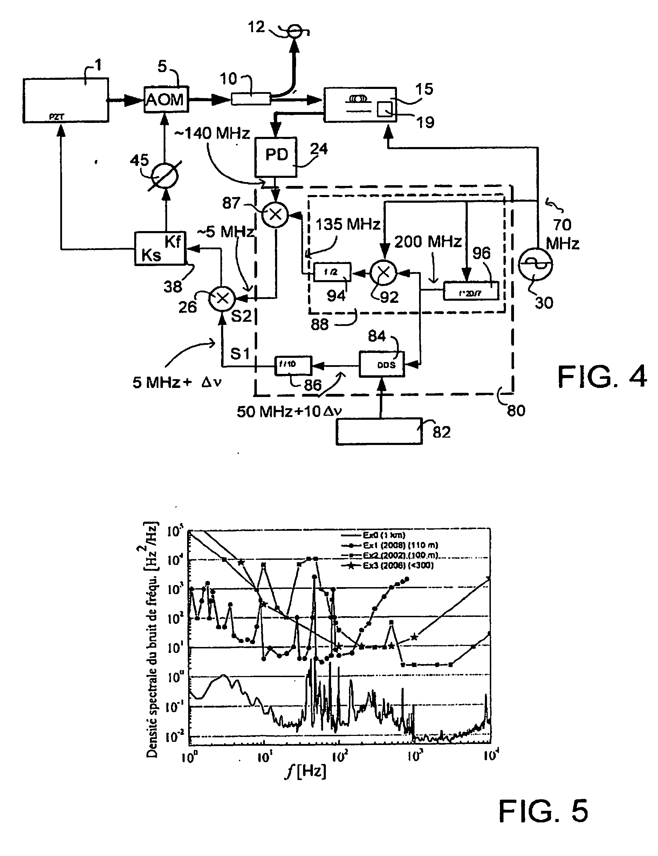

La figure 4 montre encore une variante de réalisation du système de réduction de bruit de fréquence d'un laser, permettant de contrôler la fréquence moyenne du signal optique à bas bruit de fréquence délivrée à la sortie 12. Cette variante se fonde sur la commande dynamique du déphasage θ, déjà mentionné, existant entre le signal hétérodyne et le signal local appliqués aux deux ports du mélangeur 26. La variation de phase Δθ induit une variation Δθ/2πτ de la fréquence moyenne du signal optique fourni à la sortie 12, où τ est le délai induit par la fibre 17. Selon cette variante, on a inséré un module de commande asservi de fréquence portant la référence 80 piloté, par exemple, au moyen d'un ordinateur 82 via une interface numérique. Afin de contrôler le déphasage θ, ce module introduit un décalage de fréquence contrôlé entre le signal S1 dit local et le signal hétérodyne S2 au niveau du mélangeur 26 faisant office de détecteur d'erreur. La valeur du décalage de fréquence peut être définie par l'intermédiaire de l'interface numérique et possède un bruit très faible grâce à l'utilisation d'un circuit DDS portant la référence 84, synchronisé sur l'oscillateur 30 commun au signal S2 et au signal S1. Il est possible aussi d'utiliser un oscillateur contrôlé en tension à bas bruit. La fréquence du signal de sortie du circuit 84 peut être ajustée par un diviseur de fréquence 86.Ce décalage de fréquence induit une variation de la phase Δθ/seconde=2πΔν qui induit une variation par seconde de la fréquence moyenne du signal optique à la sortie 12 de Δν/τ.

Afin de fixer les idées, la figure 4 montre un exemple de réalisation d'un tel module. Cet exemple ne limite en rien la portée de l'invention Dans cet exemple, le signal hétérodyne issu du photo-détecteur 24 est converti à une fréquence porteuse intermédiaire de 5 MHz par mélange sur un mélangeur 87 avec un signal à 135 MHz issu de l'oscillateur 30 par un circuit de synthèse de fréquence 88 à bas bruit comprenant un mélangeur 92 et des circuits multiplicateurs et diviseurs de fréquence 94 et 96. Le signal local S1 est généré par l'intermédiaire du circuit de synthèse directe numérique (DDS) 84 par exemple le circuit immatriculé AD9852 synchronisé sur l'oscillateur 30 via le circuit de synthèse de fréquence 88 à bas bruit 100 transformant le signal à 70 MHz issu de l'oscillateur 30 en un signal d'horloge à 200 MHz. Le circuit DDS, suivi du diviseur de fréquence par dix 86, génère le signal local à l'entrée de S1 avec une fréquence 5MHz +Δν.

A la figure 5, on a comparé les différentes performances de systèmes connus vis-à-vis du système de la présente invention.

La courbe Ex0 est celle procurée par le système conforme à l'invention,
La courbe Ex1 correspond au système décrit dans l'article intitulé :
   « Stabilization of Laser Intensity and Frequency Using Optical Fiber » de
      Kakeru Takahashi, Masaki Ando and Kimio Tsubono paru dans la revue : Journal of Physics: Conference Series 122 (2008) 012016
La courbe Ex2 correspond au système décrit dans l'article intitulé
   « Frequency noise réduction in erbium-doped fiber distributed-feedback lasers by electronic feedback » de G. A. Cranch, paru dans la revue OPTICS LETTERS / Vol. 27, No. 13 / July 1, 2002
La courbe Ex3 correspond au système décrit dans l'article intitulé
   " Ultra-Narrow Linewidth and High Frequency Stability Laser Sources," in Optical Amplifiers and Their Applications/Coherent de J. Cliche, M. Allard, and M. Têtu, paru dans :Optical Technologies and Applications, Technical Digest (CD) (Optical Society of America, 2006), paper CFC5.

## Revendications

1. Système laser muni d'un dispositif de rayonnement laser (1) pourvu d'une commande de fréquence (2) et d'un circuit d'asservissement de la fréquence dudit rayonnement, circuit d'asservissement comportant:
- un circuit interférométrique de type hétérodyne (15) pourvu d'une entrée (13) pour recevoir ledit rayonnement, d'une sortie d'interférence (22), d'au moins deux bras dont l'un est dit bras court 59, et un autre est dit bras long (50) et d'un dispositif de modulation de fréquence (19) disposé dans l'un des bras,
- un générateur de modulation (30) pour fournir un signal de modulation audit dispositif de modulation (19),
- un circuit photo-détecteur (24) relié à ladite sortie d'interférence,
- un circuit détecteur d'erreur (26) pour fournir un signal d'erreur, recevant d'un côté un signal dit local provenant du générateur de modulation (30) et de l'autre le signal dit hétérodyne fourni par ledit circuit photo-détecteur (24)
- un circuit de filtrage (38) pour fournir à partir des signaux émanant du circuit détecteur d'erreur (26), des premiers signaux de correction,
système **caractérisé en ce qu'**au moins les éléments participant au rayonnement laser suivants sont du type fibré, le dispositif laser (1), le circuit interférométrique (15), le circuit de modification de fréquence (5), le circuit photo-détecteur (24) et **en ce qu'**il est prévu des fibres optiques pour assurer toutes les liaisons entre ces éléments.

2. Système laser selon la revendication 1 **caractérisé en ce que** :
- le circuit d'asservissement comporte un circuit de modification de fréquence (5) pour modifier la fréquence dudit rayonnement fourni par ledit dispositif de rayonnement laser (1) par un signal appliqué à son entrée de modification (7),
- le circuit de filtrage fournit en outre des seconds signaux de correction dits rapides,
- le circuit de modification de fréquence est commandé à partir d'un oscillateur à fréquence variable (45) dont la sortie est reliée à ladite entrée de modification (7) et dont l'entrée de commande de fréquence reçoit lesdits signaux de correction rapides.

3. Système laser selon la revendication 1 ou 2 **caractérisé en ce que** le circuit interférométrique (15) est du type Michelson.

4. Système laser selon la revendication 1 ou 2 **caractérisé en ce que** le circuit interférométrique (15) est du type Mach-Zehnder.

5. Système laser selon l'une des revendications 1 à 4 **caractérisé en ce que** le système d'asservissement comporte un module de commande (80) pour faire varier de façon déterminée la fréquence du rayonnement laser en agissant sur la différence de phase entre le signal dit local et le signal dit hétérodyne entrant par les deux ports du mélangeur 26.

6. Système laser selon la revendication 5 **caractérisé en ce que** ledit module de commande de variation de fréquence (80) est formé par un générateur de signal commandable en fréquence (84) pour introduire une faible différence de fréquence à bas bruit entre le signal dit local appliqué à l'entrée S1 du mélangeur et le signal hétérodyne S2.

7. Système laser selon la revendication 6 **caractérisé en ce que** le signal issu du photo-détecteur (24) est converti à une fréquence intermédiaire par un circuit de synthèse de fréquence (88) à partir de l'oscillateur (30) afin de réduire le bruit de la source utilisée pour fournir le signal local S1.

8. Système laser selon la revendication 7 **caractérisé en ce que** ledit générateur de signal commandable en fréquence (88) est un circuit connu sous le nom de circuit de synthèse directe numérique de signal (DDS).

## Claims

1. Laser system provided with a laser radiation device (1) equipped with a frequency control (2) and a servo circuit for the frequency of said radiation, which servo circuit comprises:
- a heterodyne-type interferometric circuit (15) equipped with an inlet (13) for receiving said radiation, an interference outlet (22), at least two arms of which one is referred to as short arm (59) and the other is referred to as long arm (50) and a frequency modulation device (19) arranged in one of the arms,
- a modulation generator (30) for providing a modulation signal to the modulation device (19),
- a photodetector circuit (24) connected to said interference outlet,
- an error detector circuit (26) for providing an error signal, receiving on one side a signal referred to as local coming from the modulation generator (30) and on the other side, the signal referred to as heterodyne provided by said photodetector circuit (24),
- a filtering circuit (38) for providing, on the basis of the signals coming from the error detection circuit (26), first correction signals,
which system is **characterized in that** at least the following elements involved in the laser radiation are of the fiber type, the laser device (1), the interferometric circuit (15), the frequency modification circuit (5), the photo-detector circuit (24) and **in that** optical fibers are provided to ensure all of the connections between these elements.

2. Laser system according to claim 1, **characterized in that** the servo circuit comprises a frequency modification circuit (5) for modifying the frequency of said radiation provided by said laser radiation device (1) by a signal applied at its modification inlet (7),
- the filtering circuit also provides second correction signals referred to as fast,
- the frequency modification circuit is controller by means of a variable frequency oscillator (45) of which the outlet is connected to said modification inlet (7) and of which the frequency control inlet receives said fast correction signals.

3. Laser system according to claim 1 or 2, **characterized in that** the interferometric circuit (15) is of the Michelson type.

4. Laser system according to claim 1 or 2, **characterized in that** the interferometric circuit (15) is of the Mach-Zehnder type.

5. Laser system according to any of claims 1 to 4, **characterized in that** the servo system comprises a control module (80) for varying, in a determined manner, the frequency of the laser radiation by acting on the phase difference between the local signal and the heterodyne signal entering through the two ports of the mixer (26).

6. Laser system according to claim 5, **characterized in that** said frequency variation control module (80) is formed by a frequency-controllable signal generator (84) so as to introduce a small low-noise frequency difference between the local signal applied at the inlet S1 of the mixer and the heterodyne signal S2.

7. Laser system according to claim 6, **characterized in that** the signal coming from the photodetector (24) is converted at an intermediate frequency by a frequency synthesis circuit (88) by means of the oscillator (30) so as to reduce the noise of the source used to provide the local signal S1.

8. Laser system according to claim 7 **characterized in that** said frequency-controllable signal generator (88) is a circuit known as a direct digital signal synthesis circuit (DDS).

## Patentansprüche

1. Lasersystem, ausgestattet mit einer Laserstrahlungsvorrichtung (1), versehen mit einer Frequenzsteuerung (2) und einer Schaltung zur Steuerung der Frequenz der Strahlung, wobei die Steuerungsschaltung Folgendes umfasst:
- eine interferometrische Schaltung der heterodynen Art (15), versehen mit einem Eingang (13), um die Strahlung zu empfangen, einem Interferenzausgang (22), mindestens zwei Armen, wobei einer als kurzer Arm (59) bezeichnet wird und ein anderer als langer Arm (50) bezeichnet wird, und eine Vorrichtung zur Frequenzmodulation (19), die in einem der Arme angebracht ist,
- einen Modulationsgenerator (30), um ein Modulationssignal an die Modulationsvorrichtung (19) zu liefern,
- eine Photodetektorschaltung (24), die mit dem Interferenzausgang verbunden ist,
- ein Fehlerdetektorschaltung (26), um ein Fehlersignal zu liefern, die einerseits ein Signal, das als lokales Signal bezeichnet wird, das vom Modulationsgenerator (30) stammt, empfängt, und andererseits das Signal, das als heterodynes Signal bezeichnet wird, das von der Photodektorschaltung (24) geliefert wird.
- eine Filterschaltung (38), um ausgehend von Signalen, die aus der Fehlerdetektorschaltung (26) stammen, erste Korrektursignale zu liefern,
System, **dadurch gekennzeichnet, dass** mindestens die Elemente, die an den folgenden Laserstahlungen beteiligt sind, faserartig sind, die Laservorrichtung (1), die interferometrische Schaltung (15), die Frequenzmodifikationsschaltung (5), die Photodetektorschaltung (24), und dadurch, dass es mit optischen Fasern versehen ist, um alle Verbindungen zwischen diesen Elementen sicherzustellen.

2. Lasersystem nach Anspruch 1, **dadurch gekennzeichnet, dass**:
- die Steuerungsschaltung eine Frequenzmodifikationsschaltung (5) umfasst, um die Frequenz der Strahlung, die von der Laserstrahlungsvorrichtung (1) geliefert wird, durch ein Signal zu modifizieren, das an ihrem Modifikationseingang (7) angewendet wird.
- die Filterschaltung außerdem zweite Korrektursignale, die als schnelle Korrektursignale bezeichnet werden, liefert,
- die Frequenzmodifikationsschaltung ausgehend von einem Oszillator mit variabler Frequenz (45) gesteuert wird, dessen Ausgang mit dem Modifikationseingang (7) verbunden ist, und dessen Frequenzsteuereingang die schnellen Korrektursignale empfängt.

3. Lasersystem nach Anspruch 1 oder 2, **dadurch gekennzeichnet, dass** die interferometrische Schaltung (15) vom Typ Michelson ist.

4. Lasersystem nach Anspruch 1 oder 2, **dadurch gekennzeichnet, dass** die interferometrische Schaltung (15) vom Typ Mach-Zehnder ist.

5. Lasersystem nach einem der Ansprüche 1 bis 4, **dadurch gekennzeichnet, dass** das Steuerungssystem ein Steuermodul (80) umfasst, um auf bestimmte Weise die Frequenz der Laserstrahlung variieren zu lassen, indem auf den Phasenunterschied zwischen dem Signal, das als lokales Signal bezeichnet wird, und dem Signal, das als heterodynes Signal bezeichnet wird, die durch die zwei Anschlüsse des Mischers (26) eintreten, eingewirkt wird

6. Lasersystem nach Anspruch 5, **dadurch gekennzeichnet, dass** das Modul zur Steuerung der Frequenzvariation (80) durch einen Signalgenerator gebildet wird, dessen Frequenz (84) gesteuert werden kann, um einen geringfügigen Frequenzunterschied mit niedrigem Geräusch zwischen dem Signal, das als lokales Signal bezeichnet wird, angewendet auf den Eingang des Mischers, und dem heterodynen Signal S2 einzuführen.

7. Lasersystem nach Anspruch 6, **dadurch gekennzeichnet, dass** das Signal, das vom Photodetektor (24) stammt, durch eine Frequenzsyntheseschaltung (88) ausgehend von dem Oszillator (30) in eine Zwischenfrequenz umgewandelt wird, um das Geräusch der Quelle, die vom lokalen Signal S1 verwendet wird, zu reduzieren.

8. Lasersystem nach Anspruch 7, **dadurch gekennzeichnet, dass** der Signalgenerator, dessen Frequenz (88) gesteuert werden kann, eine Schaltung ist, die unter der Bezeichnung direkte numerische Signalsyntheseschaltung (DDS) bekannt ist.
